# EUROPEAN PATENT APPLICATION

(11) **EP 4 571 608 A1**
(43) Date of publication of application: **18.06.2025**
(21) Application number: 24215377.3
(22) Date of filing: 26.11.2024
(51) Int. Cl.: G06Q 10/04, G06F 17/18, G06N 20/00, G06Q 10/063, G06Q 30/0201, G06Q 30/0202

(54) **DYNAMIC ALGO CONTAINER FRAMEWORK**

(30) Priority: 12.12.2023 IN 202321084863
(71) Applicant: Tata Consultancy Services Limited, Maharashtra (IN)
(72) Inventor: THOPPASAMY, KALAIYARASI, 600097 Chennai, Tamil Nadu (IN); KRISHNADHAS MANI, THANGAKUMAR, 600097 Chennai, Tamil Nadu (IN); JAYAVEER, DEEPA DEVI, 600096 Chennai, Tamil Nadu (IN); THIRUNAVUKKARASU, JEISOBERS, 600097 Chennai, Tamil Nadu (IN); ULAGANATHAN, SELVA GANAPATHY, 600097 Chennai, Tamil Nadu (IN)
(74) Representative: Goddar, Heinz J.

(57) **Abstract**

With changing customer trends and increasing competition, retailers are expected to react quickly and execute their machine learning (ML) pipeline strategies in a very short window and find which algorithm/model works better for their problem statement. Present disclosure provides method and system for dynamic retail requirements. The system uses algorithm container framework that helps in identifying best fit algorithm to solve retail problem. In particular, algorithm container framework finds best hyperparameter and functional parameters of algorithm to attain desired optimal result. The system also uses algorithm calibrator for fine tuning parameters and hyperparameters used for algorithm to achieve optimal result. Once optimal results are obtained, system logs inputs such as best algorithm and their associated optimal results from ML pipeline into algorithm calibrator repository which is then used for fine tuning of stages to obtain accurate results.

## Description

### CROSS-REFERENCE TO RELATED APPLICATIONS AND PRIORITY

The present application claims priority to Indian application no. Indian Patent Application No. 202321084863, filed on December 12, 2023.

### TECHNICAL FIELD

The disclosure herein generally relates to retail problems, and, more particularly, to a method and a system for handling dynamic retail requirements.

### BACKGROUND

In retail, with changing customer trends and increasing competition, retailers are required to react quickly and execute their machine learning (ML) pipeline strategies in a very short window. Thus, they need to find which algorithm/model works better for their problem statement. Further, in retail industry, for any business problem like price elasticity, space, assortment optimization etc., specific algorithms are used. At times, many manual interventions/supervisions are required from business experts to decide which algorithm can be the best fit for a particular business problem. Even business experts face challenges in deciding appropriate information and level of aggregation to address the business problem.

Existing approaches do not have an automatic way of finding the best algorithms at each stage of ML pipeline based on changing business scenario. And, majority of the existing algorithm frameworks consider only analytical criteria and completely miss on the business criteria, such as business rules, domain specific ranges/values etc. Hence, the existing algorithm frameworks create issue in implementation stage as they are expected to consider both the analytical as well as the business criteria for successful implementation.

Further, the existing approaches have limited evaluation metrics option to identify performance of the model. Additionally, they do not have any logging mechanism for outcomes of business decision model in terms of metrics, intermediate results, standards and the like.

### SUMMARY

Embodiments of the present disclosure present technological improvements as solutions to one or more of the above-mentioned technical problems recognized by the inventors in conventional systems. For example, in one aspect, there is provided a method for handling dynamic retail requirements. The method comprises receiving, via one or more hardware processors, historical data associated with a retailer and a retail business problem, wherein the historical data comprises transaction data, and sale associated data of a predefined time period; processing, via the one or more hardware processors, the historical data based on the retail business problem using one or more processing techniques to obtain a pre-processed historical data; generating, via the one or more hardware processors, one or more statistical features based on the pre-processed historical data using a feature generation technique: solving, via the one or more hardware processors, the retail business problem based on the one or more statistical features using one or more retail algorithms, wherein the one or more retail algorithms are accessed from an algorithm container, and wherein each retail algorithm uses a set of parameters and hyperparameters; identifying, via the one or more hardware processors, a retail algorithm among the one or more retail algorithms that achieves highest accuracy, wherein the retail algorithm is identified by comparing accuracy measures of the one or more retail algorithms; determining, via the one or more hardware processors, whether an optimal result is obtained using the identified retail algorithm by comparing an output of the identified retail algorithm with a predefined output threshold, wherein the optimal result is obtained when the output of the identified retail algorithm is in a predefined range of the predefined output threshold; and fine-tuning, via the one or more hardware processors, a system using an algorithm calibrator to obtain an improved system upon determining that the optimal result is not obtained, wherein the improved system solves the retail business problem in an accurate manner.

In an embodiment, generating the one or more statistical features based on the pre-processed historical data using the feature generation technique comprises: performing, via the one or more hardware processors, one or more data treatments on the one or more statistical features to obtain one or more transformed statistical features.

In an embodiment, solving the retail business problem based on the one or more statistical features using the one or more retail algorithms comprises solving, via the one or more hardware processors, the retail business problem based on the one or more transformed statistical features using the one or more retail algorithms.

In an embodiment, fine-tuning the system using the algorithm calibrator comprises fine-tuning, via the one or more hardware processors, the historical data used for solving the retail business problem by the algorithm calibrator to obtain fine-tuned historical data; fine-tuning, via the one or more hardware processors, the one or more transformed statistical features that are used for solving the retail business problem by the algorithm calibrator to obtain a plurality of fine-tuned statistical features; and fine-tuning, via the one or more hardware processors, the one or more retail algorithms that are used for solving the retail business problem by the algorithm calibrator, wherein each retail algorithm of the one or more retail algorithms is fine-tuned using the plurality of fine-tuned statistical features and a plurality of combinations of the set of parameters, and the hyperparameters as an improvement process until the improved system is obtained.

In an embodiment, the method comprises: saving, via the one or more hardware processors, the optimal result in an algorithm calibrator repository along with the historical data and the retail business problem upon determining that the optimal result is obtained, wherein the optimal result comprises the determined retail algorithm, the one or more statistical features, and the set of parameters and the hyperparameters used in the determined retail algorithm.

In an embodiment, the method comprises: using, via the one or more hardware processors, the algorithm calibrator repository for determining the optimal result for validation of a similar business problem for a new retailer.

In an embodiment, wherein the predefined output threshold and the predefined range of the predefined output threshold are decided based on one of: an optimal value suggested by a generative artificial intelligence (AI) based model present for the retail business problem, an algorithm calibrator repository maintained for the retail business problem, and a value suggested by at least one subject matter expert (SME).

In an embodiment, the one or more retail algorithms comprises one or more of open-source retail algorithms, licensed retail algorithms, and customized retail algorithms.

In another aspect, there is provided a system for handling dynamic retail requirements. The system comprises a memory storing instructions; one or more communication interfaces; and one or more hardware processors coupled to the memory via the one or more communication interfaces, wherein the one or more hardware processors are configured by the instructions to: receive historical data associated with a retailer and a retail business problem, wherein the historical data comprises transaction data, and sale associated data of a predefined time period; process the historical data based on the retail business problem using one or more processing techniques to obtain a pre-processed historical data; generate one or more statistical features based on the pre-processed historical data using a feature generation technique; solve the retail business problem based on the one or more statistical features using one or more retail algorithms, wherein the one or more retail algorithms are accessed from an algorithm container, and wherein each retail algorithm uses a set of parameters and hyperparameters; identify a retail algorithm among the one or more retail algorithms that achieves highest accuracy, wherein the retail algorithm is identified by comparing accuracy measures of the one or more retail algorithms; determine whether an optimal result is obtained using the identified retail algorithm by comparing an output of the identified retail algorithm with a predefined output threshold, wherein the optimal result is obtained when the output of the identified retail algorithm is in a predefined range of the predefined output threshold; and fine-tune a system using an algorithm calibrator to obtain an improved system upon determining that the optimal result is not obtained, wherein the improved system solves the retail business problem in an accurate manner.

In yet another aspect, there are provided one or more non-transitory machine-readable information storage mediums comprising one or more instructions which when executed by one or more hardware processors cause handling of dynamic retail requirements by receiving historical data associated with a retailer and a retail business problem, wherein the historical data comprises transaction data, and sale associated data of a predefined time period; processing the historical data based on the retail business problem using one or more processing techniques to obtain a pre-processed historical data; generating one or more statistical features based on the pre-processed historical data using a feature generation technique; solving the retail business problem based on the one or more statistical features using one or more retail algorithms, wherein the one or more retail algorithms are accessed from an algorithm container, and wherein each retail algorithm uses a set of parameters and hyperparameters; identifying a retail algorithm among the one or more retail algorithms that achieves highest accuracy, wherein the retail algorithm is identified by comparing accuracy measures of the one or more retail algorithms; determining whether an optimal result is obtained using the identified retail algorithm by comparing an output of the identified retail algorithm with a predefined output threshold, wherein the optimal result is obtained when the output of the identified retail algorithm is in a predefined range of the predefined output threshold; and fine-tuning a system using an algorithm calibrator to obtain an improved system upon determining that the optimal result is not obtained, wherein the improved system solves the retail business problem in an accurate manner.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is an example representation of an environment, related to at least some example embodiments of the present disclosure.
FIG. 2 illustrates an exemplary block diagram of a system for handling dynamic retail requirements, in accordance with an embodiment of the present disclosure.
FIG. 3 illustrates a schematic block diagram representation of an algorithm container framework present in the system for handling dynamic retail requirements, in accordance with an embodiment of the present disclosure.
FIGS. 4A and 4B, collectively, represent an exemplary flow diagram of a method for handling dynamic retail requirements, in accordance with an embodiment of the present disclosure.
FIG.5 illustrates a schematic block diagram representation depicting a process followed by the algorithm container framework for finding the best algorithm, in accordance with an embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

In retail, every client is unique in terms of data availability and nature of business. Hence, it becomes challenging to develop a framework that can be used by every retail client.

Further, it is well known that in retail, the analytical results provided by the algorithms or the data processing activities need to be validated in terms of business context. In the field of data analytics, particularly in descriptive analytics, the validation is done either by business experts or by analytical expert in the form of graphs, or aggregated measures, and the like. For an instance, a relationship between price and quantity of sales is validated in business context through a scatter plot to get a first level insight on whether to proceed further or to revisit the input data for performing data treatments, such as outlier removal or different level of data aggregation such as daily, weekly, or monthly and the like. Similarly, in predictive analytics, the validation is done by the business expert in business context. For an instance, a key sales driver identification for each category is carried out by a ML method such as Random Forest and the like. The identified category level sales drivers are then validated in business context using validation measures, such as R square, mean-absolute-error or mean-squared-error and the like. Thereafter, it is decided whether it is required to revisit the data processing or feature engineering techniques to attain the results which will move toward the desired business context. Thus, it becomes essential that the same approach of business context validation is being followed by a framework in place of business expert and the framework is capable of making decision with respect to the business context.

Further, for every business problem, a plurality of algorithms are available that can be used. Hence, it gets difficult to decide what all information and level of aggregation is required to address the business problem. Additionally, even after algorithm to be used is decided, there will be too much technical dependency on business experts for defining hyper parameters and/or functional parameters of the decided algorithm which further increases the development time required for defining the ML pipeline during model creation.

Embodiments of the present disclosure overcome the above-mentioned disadvantages by providing a method and a system for handling dynamic retail requirements. The system of the present disclosure uses an algorithm container framework that helps in identifying a best fit algorithm among the plurality of algorithms that can be used to solve a retail problem. In particular, the algorithm container framework finds the best hyperparameter and functional parameters of an algorithm to be used to attain the accurate optimal result. The system also uses algorithm calibrator for fine tuning parameters and hyperparameters used for the algorithm to achieve the optimal result. Once the optimal results are obtained, the system logs the inputs such as data statistics and their patterns, resulting output such as best algorithm and their associated hyperparameters, parameters, and metrics derived from a ML pipeline into an algorithm calibrator repository maintained by the system. The algorithm calibrator repository acts as a key repository that helps in identifying optimal results and the parameters/hyperparameters of the ML pipeline based on a received problem statement for future validation.

In the present disclosure, the system and the method automatically finds a best fit algorithm at each stage of ML pipeline based on changing business requirement, thereby reducing manual interventions/supervisions required from business experts in deciding the algorithm which ultimately reduces the technical dependency and development time spent on defining ML pipeline during model creation. The system also stores statistical features and the set of parameters and the hyperparameters used in the best fit algorithm, thereby reducing the time spent on finding the set of parameters and the hyperparameters to be used in the best fit algorithm for a similar business problem faced by a new retailer.

Additionally, the system stores the optimal results which acts as a standard or act as a guidance measure from a business perspective. So, the system is enabled to consider both analytic as well as business criteria, and thus the solutions provided are practically implementable in real situations.

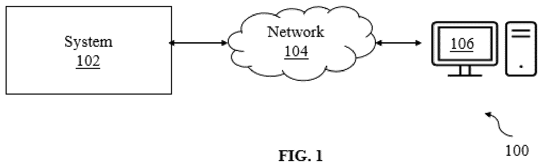

Referring now to the drawings, and more particularly to FIGS. 1 through 5, where similar reference characters denote corresponding features consistently throughout the figures, there are shown preferred embodiments and these embodiments are described in the context of the following exemplary system and/or method.

FIG. 1 illustrates an exemplary representation of an environment 100 related to at least some example embodiments of the present disclosure. Although the environment 100 is presented in one arrangement, other embodiments may include the parts of the environment 100 (or other parts) arranged otherwise depending on, for example, processing historical data, generating statistical features, identifying retail algorithm, etc. The environment 100 generally includes a system 102, and an electronic device 106 (hereinafter also referred as a user device 106), each coupled to, and in communication with (and/or with access to) a network 104. It should be noted that one user device is shown for the sake of explanation; there can be more number of user devices.

The network 104 may include, without limitation, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, a virtual network, and/or another suitable public and/or private network capable of supporting communication among two or more of the parts or users illustrated in FIG. 1, or any combination thereof.

Various entities in the environment 100 may connect to the network 104 in accordance with various wired and wireless communication protocols, such as Transmission Control Protocol and Internet Protocol (TCP/IP), User Datagram Protocol (UDP), 2nd Generation (2G), 3rd Generation (3G), 4th Generation (4G), 5th Generation (5G) communication protocols, Long Term Evolution (LTE) communication protocols, or any combination thereof.

The user device 106 is associated with a retailer or a shop owner responsible for managing retail stores. Examples of the user device 106 include, but are not limited to, a personal computer (PC), a mobile phone, a tablet device, a Personal Digital Assistant (PDA), a server, a voice activated assistant, a smartphone, and a laptop.

The system 102 includes one or more hardware processors 204 and a memory. The system 102 is first configured to receive historical data associated with the retailer and a retail business problem that the retailer wants to get resolved via the network 104 from the user device 106. In an embodiment, the historical data comprises transaction data, and sale associated data of a predefined time period. In an embodiment, the sale associated data includes, but is not limited to, inventory data, competitor details, competitor price history, store details, retail stock keeping unit (sku) details, retail sku price log, weather, calendar, competitor store distance, promotions details, markdown details, online cart details of customer, browsing history, product feedback, sku facing details, sku images feature extracts, planogram details, and the like.

The system 102 then pre-process the historical data based on the retail business problem using one or more processing techniques to obtain pre-processed historical data. Thereafter, the system 102 generates one or more statistical features based on the pre-processed historical data using a feature generation technique. Based on the statistical features, the system solves the retail business problem using one or more retail algorithms that are accessed from an algorithm container present in the system 102. Further, the system 102 identifies a retail algorithm among the one or more retail algorithms that achieves highest accuracy by comparing accuracy measures of each retail algorithm.

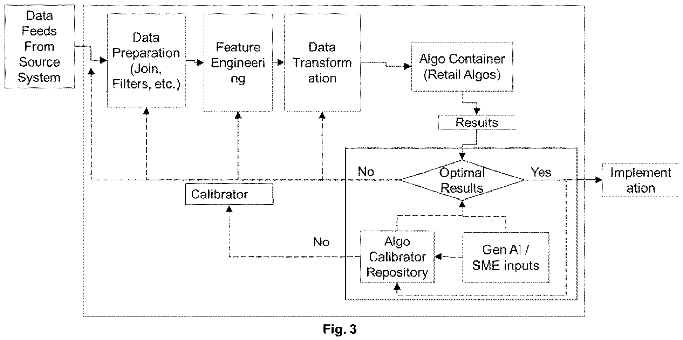

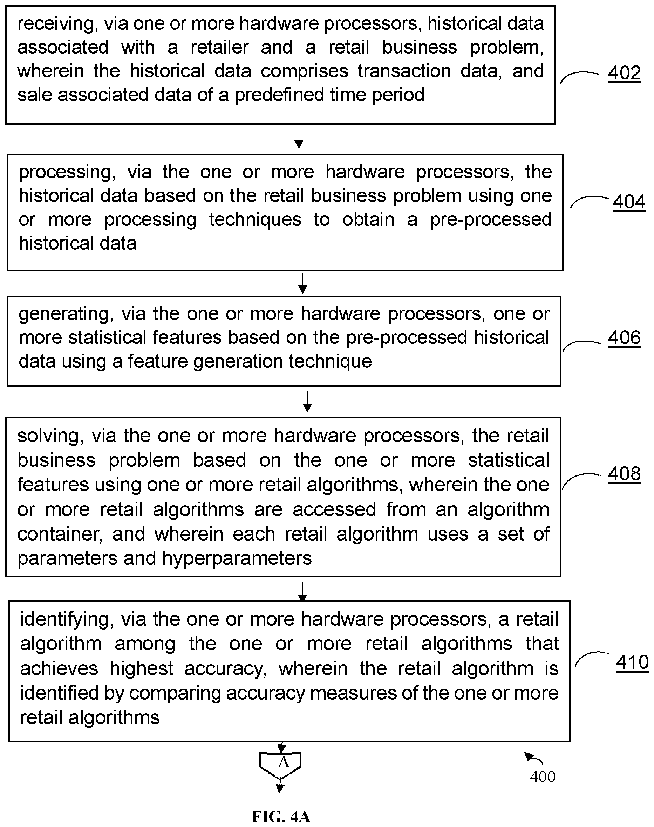

Once the retail algorithm with highest accuracy measure is identified, the system 102 determines whether an optimal result is obtained using the identified retail algorithm by comparing an output of the identified retail algorithm with a predefined output threshold. In case the optimal result is obtained, the system 102 saves the optimal result in an algorithm calibrator repository maintained in the system 102 along with the historical data and the retail business problem. Else, the system 102 is fine-tuned by an algorithm calibrator present in the system 102 to obtain an improved system 102. The improved system 102 solves the retail business problem in an accurate manner. The process of fine-tuning is explained in detail with reference to FIGS. 3 and 4A-4B.

The number and arrangement of systems, devices, and/or networks shown in FIG. 1 are provided as an example. There may be additional systems, devices, and/or networks; fewer systems, devices, and/or networks; different systems, devices, and/or networks; and/or differently arranged systems, devices, and/or networks than those shown in FIG. 1. Furthermore, two or more systems or devices shown in FIG. 1 may be implemented within a single system or device, or a single system or device shown in FIG. 1 may be implemented as multiple, distributed systems or devices. Additionally, or alternatively, a set of systems (e.g., one or more systems) or a set of devices (e.g., one or more devices) of the environment 100 may perform one or more functions described as being performed by another set of systems or another set of devices of the environment 100 (e.g., refer scenarios described above).

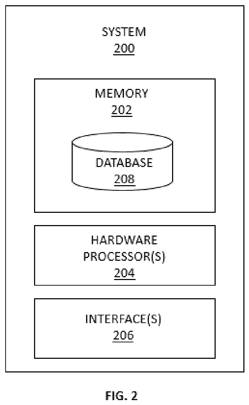

FIG. 2 illustrates an exemplary block diagram of the system 102 for handling dynamic retail requirements, in accordance with an embodiment of the present disclosure. In some embodiments, the system 102 is embodied as a cloud-based and/or SaaS-based (software as a service) architecture. In some embodiments, the system 102 may be implemented in a server system. In some embodiments, the system 102 may be implemented in a variety of computing systems, such as laptop computers, notebooks, hand-held devices, workstations, mainframe computers, and the like.

In an embodiment, the system 102 includes one or more processors 204, communication interface device(s) or input/output (I/O) interface(s) 206, and one or more data storage devices or memory 202 operatively coupled to the one or more processors 204. The one or more processors 204 may be one or more software processing modules and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 102 can be implemented in a variety of computing systems, such as laptop computers, notebooks, hand-held devices, workstations, mainframe computers, servers, a network cloud and the like.

The I/O interface device(s) 206 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 202 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, a database 208 can be stored in the memory 202, wherein the database 208 may comprise, but are not limited to, algorithm calibrator repository, a predefined output threshold, a predefined range of the predefined output threshold, one or more techniques, one or more processes and the like. The memory 202 further comprises (or may further comprise) information pertaining to input(s)/output(s) of each step performed by the systems and methods of the present disclosure. In other words, input(s) fed at each step and output(s) generated at each step are comprised in the memory 202 and can be utilized in further processing and analysis.

It is noted that the system 102 as illustrated and hereinafter described is merely illustrative of an apparatus that could benefit from embodiments of the present disclosure and, therefore, should not be taken to limit the scope of the present disclosure. It is noted that the system 102 may include fewer or more components than those depicted in FIG. 2.

FIG. 3, with reference to FIGS, 1-2, illustrates a schematic block diagram representation of an algorithm container framework 300 present in the system 102 of FIGS. 2 and 1 for handling dynamic retail requirements, in accordance with an embodiment of the present disclosure.

As seen in FIG.3, the algorithm container framework 300 present in the system 102 receives data feeds (i.e., the historical data and the retail business problem) from a source system of a retailer. In an embodiment, the source system can be considered similar to the user device 106 shown with respect to FIG. 1. The historical data includes transaction data, and sale associated data of the predefined time period. Then, the algorithm container framework 300 prepares the historical data by processing the historical data based on the retail business problem using one or more processing techniques to obtain pre-processed historical data. In an embodiment, the one or more processing techniques include, but are not limited to, data cleaning, data normalization, data sampling, data joining, data filtering, denoising etc.

Once the pre-processed historical data is available, the algorithm container framework 300 performs feature engineering on the pre-processed historical data using a feature generation technique to generate one or more statistical features. Examples of the one or more statistical features include, but are not limited to, competitor price, customer age, distance, inventory, calendar, weather etc. Examples of the feature generation technique that can be used for generating features may include, but are not limited to, clustering, bucketing, normalization, interpolation, imputation etc.

Thereafter, the algorithm container framework 300 performs one or more data treatments on the one or more statistical features as part of data transformation to obtain one or more transformed statistical features. Examples of the one or more data treatments include, but are not limited to, outlier treatment, missing value treatment, and the like. Further, the algorithm container framework 300 try to solve the retail business problem based on the one or more transformed statistical features using one or more retail algorithms that are present in the algorithm container. Each retail algorithm uses a set of parameters and hyperparameters for solving the retail business problem.

In an embodiment, outputs of each retail algorithm that is used by the algorithm container framework 300 to solve the retail business problem are compared to identify a retail algorithm that achieves highest accuracy. Thereafter, the algorithm container framework 300 checks whether optimal result are obtained using the identified retail algorithm. The algorithm container framework 300 logs inputs such as data statistics and their patterns (descriptive stats and others), resulting output such as the identified retail algorithm and their associated, parameters, hyperparameters, metrics into an algorithm calibrator repository after optimal results are obtained. The algorithm calibrator repository acts as a key repository that helps in identifying optimal results and the parameters and hyperparameters of the retail algorithm to be use for future validation.

In an embodiment, the algorithm calibrator repository store historical run details after every run with optimal results as a continuous process. Thus, in long run, the system 102 may have a standard repository that can be used to validate future runs as well as to finetune algo pipeline as required for future retailers. In particular, more the amount of storage of the optimal results in the algorithm calibrator repository, more mature the algorithm calibrator repository will be and hence, more accurate will be the output of the algorithm container framework 300.

In at least one example embodiment, the algorithm calibrator repository comprises a plurality of sub-modules, where each sub-module of the plurality of sub-modules may capture optimal results specific to a business requirement for an enterprise. For example, one sub-module may capture price elasticity value specific to a pet retailer and thus that sub-module may act as a standard to validate the results for another pet retailer in the longer run. Similarly, in another instance, another sub-module may capture space elasticity value specific to an electronic retailer and thus another sub-module may act as a standard to validate the results for another electronic retailer in the longer run.

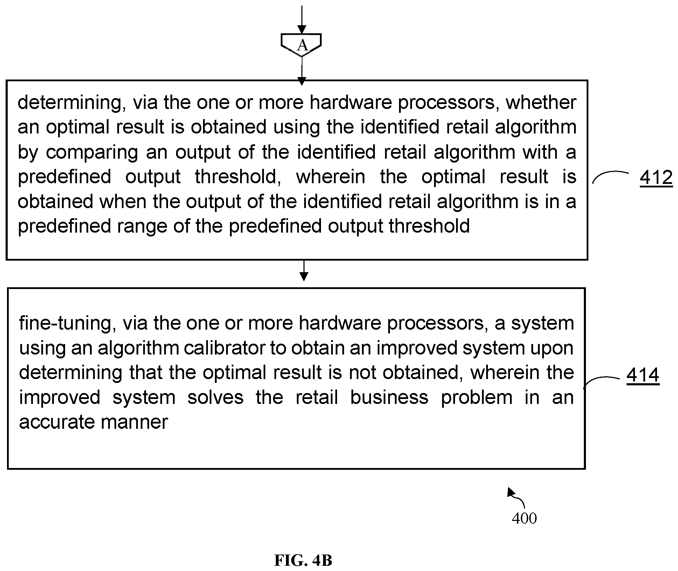

In an embodiment, the algorithm container framework 300 performs fine-tuning using the algorithm calibrator upon determining that the optimal result is not obtained. The algorithm calibrator fine tunes stage parameter and hyperparameters with possible combinations till the optimal results are achieved. The process of fine-tuning is explained in detail with reference to FIGS. 4A and 4B.

FIGS. 4A and 4B, with reference to FIGS. 1 to 3, collectively, represent an exemplary flow diagram of a method 400 for handling dynamic retail requirements, in accordance with an embodiment of the present disclosure. The method 400 may use the system 102 of FIGS. 1 and 2 for execution. In an embodiment, the system 102 comprises one or more data storage devices or the memory 202 operatively coupled to the one or more hardware processors 204 and is configured to store instructions for execution of steps of the method 400 by the one or more hardware processors 204. The sequence of steps of the flow diagram may not be necessarily executed in the same order as they are presented. Further, one or more steps may be grouped together and performed in form of a single step, or one step may have several sub-steps that may be performed in parallel or in sequential manner. The steps of the method of the present disclosure will now be explained with reference to the components of the system 102 as depicted in FIG. 2 and FIG. 1.

At step 402 of the present disclosure, the one or more hardware processors 204 of the system 102 receive historical data associated with a retailer and a retail business problem. In an embodiment, the historical data comprises transaction data, and sale associated data of a predefined time period.

At step 404 of the present disclosure, the one or more hardware processors 204 of the system 102 process the historical data based on the retail business problem using one or more processing techniques to obtain pre-processed historical data. In an embodiment, yet another markup language (YAML) creation is done for the retail business problem, such as price elasticity, space elasticity, demand prediction, space optimization, etc. In particular, the ML pipeline of the algorithm container framework is configured via a YAML configuration file present at the back end. The YAML configuration files store the information related to ML pipeline, such as stages like data fetch, data filter, outlier detection and removal, feature engineering, clusters, algorithms, post processing / results extraction with parameters and hyperparameters configured.

And, then based on retail business problem, one or more processing techniques, such as data cleaning, data normalization, data sampling, data joining, data filtering, denoising etc., are applied on the received data to prepare data based on the retail business problem. For example, if the retail business problem considered is demand forecasting, then in that case the system 102 may process the historical data in a plurality of categories, such as category A- past 2 years, category B - past 3 years, category C- past 4 years and so on. Initially, the system 102 may consider past 2 years of data and perform the next steps. In case the result obtained with the past 2 years are not satisfactory, the system in a next iteration may consider past 3 years of data. It should be noted that the results become satisfactory when the forecasted demand is within an acceptable range for each category for the selected time period. An example representation of the algorithm calibrator repository in different iterations is shown below:
Iteration 1: (2 years data)
[Category name, Metrics, Optimal mean absolute percentage error (MAPE) attained, Standard Error]
[Category A, MAPE, 20%, 5%]
[Category B, MAPE, 25%, 5%]
Iteration 2: (3 years data) - giving best results
   [Category name, Metrics, Optimal MAPE attained, Standard Error]
   [Category A, **MAPE, 18%,** 5%]
   [Category B, MAPE, 22%, 5%]
Iteration 10: (11 years data)
   [Category name, Metrics, Optimal MAPE attained, Standard Error]
   [Category A, MAPE, 40%, 5%]
   [Category B, MAPE, 50%, 5%]

In another exemplary scenario, if the retail business problem considered is price elasticity (PE) calculation, then in that case the system 102 may process the historical data in the categories, such as category A- past 2 years, category B - past 3 years, category C- past 4 years and so on. Initially, the system 102 may consider the past 3 months of data and perform the next steps. In case the result obtained with the past 3 months of historical data are not satisfactory, the system 102, in a next iteration, may consider past 1 year of historical data. It should be noted that the results become satisfactory when the calculated price elasticity is within an acceptable range for each category for the selected time period. Further, if the result is still not satisfactory, then the system 102 adjusts the time period to achieve the success criteria of optimal results.

An example representation of the algorithm calibrator repository in different iterations for the mentioned exemplary scenario is shown below:
Success Criteria: Minimal deviation from optimal price elasticity that comes from Generative artificial intelligence (AI) based model or at least one subject matter expert (SME)
Category A -> PE = -0.50, Category B -> PE = -0.25]
Iteration 1: (Recent 3 months)
   [Category name, Metrics, Optimal Price Elasticity attained, Standard Error]
   [Category A, PE, -0.3, 5%]
   [Category B, PE, -0.45, 5%]
Iteration 2: (1 year) - giving best results
   [Category name, Metrics, Optimal Price Elasticity attained, Standard Error]
   [Category A, PE, -0.53, 5%]
   [Category B, PE, -0.25, 5%]
Iteration 3: (2 year)
   [Category name, Metrics, Optimal Price Elasticity attained, Standard Error]
   [Category A, PE, 5.4, 5%]
   [Category B, PE, -0.5, 5%]
Iteration n: (3 year)
   [Category name, Metrics, Optimal Price Elasticity attained, Standard Error]
   [Category A, PE, 0.3, 5%]
   [Category B, PE, -0.08, 5%]

In yet another exemplary scenario, as we know a trade area to be considered for shortlisting the competitors for a particular stock keeping unit (SKU) category is very important and these criteria may change from one SKU category to another SKU category. So, for SKU categories like luxury electronics, grocery, automobiles, the competitors may vary and accordingly the competitor trade area range may also vary. For example, for SKU category like grocery, a customer may look for a nearby competitor for grocery products if the price is high, but for SKU categories like luxury electronics and automobiles, the customer may go to a distance competitor store to get a relatively lesser value with offers. So, the filter condition to select the trade area (km/miles in radius) is adjusted dynamically by the user for each SKU category so that the data selection criteria is changed accordingly using the system 102.

Once the pre-processing of the historical data is done, the pre-processed historical data is fetched in machine learning pipeline for further processing.

At step 406 of the present disclosure, the one or more hardware processors 204 of the system 102 generate one or more statistical features based on the pre-processed historical data using a feature generation technique. In particular, statistical features, such as competitor price, distance, inventory, calendar, weather related features etc. that are required for training of the system 102 are generated at this step.

In an exemplary scenario, for calculating optimized price recommendation of SKUs when SKU elasticity is found to be not as per standards, then the system 102 may first perform segment based feature calculation i.e., different SKUs are standardized to segment level (e.g., unit price and quality conversion) and then segment based elasticity estimation is done.

In another exemplary scenario, the aggregation level of data may change from one SKU category to another SKU category. For example, for category A (perishable items), the optimal results (for price elasticity) may be obtained using hourly aggregation. For category B (Electronics), the optimal instance may be obtained doing quarterly aggregation. So, the statistical features considered by the system 102 may keep changing based on the SKU category.

Additionally, other data feeds like competitor, customer age, calendar, weather, etc. available may also be merged to the transaction data and the statistical features are generated accordingly. The methods that can be followed may include:
Method 1- competitor price distance is calculated and used as an input to a ML model. The number of competitors considered is dynamic to attain optimal beta value.
Method 2: weekday, weekend, holidays, month start, and month end flags are generated in the features list from the calendar table and added as an input to the model.
Method 3: weather details like temperature, humidity, rainfall details from the weather table are extracted as features based on the retail SKU category, such as cool drinks, grocery, ice cream, etc. which further improves the accuracy of the system 102.
Method 4: seasonality features like hourly, daily, and even weekly seasonality index features can be considered as another set of features which may be dynamically generated for the SKU category like grocery products (seasonal products), gift items for festivals etc.
Method 5: features like promo flag, promo percentage, markdown flag, markdown price variation percentage, markdown period etc. can be generated based on the availability of the data feeds like promotions, markdown tables and the like.
Method 6: features like competitor price distance, competitor price lag effect between competitor price and SKU units sold in a respective store could be generated based on the availability of the data feeds like competitor and competitor price tables. So, the statistical features are generated dynamically by the system 102 using the algorithm container framework based on the data feeds available to the ML pipeline. It should also be noted that the statistical features are generated based on the retail business problem. And any feature generation technique that may be suitable for the retail business problem is considered by the system 102 at this step. Examples of the feature generation technique may include, but are not limited to, clustering, bucketing, normalization, interpolation, imputation, scaling, etc.

In an embodiment, the system 102 performs one or more data treatments on the one or more statistical features to obtain one or more transformed statistical features. Examples of the one or more data treatments may include, but are not limited to, missing value treatments, outlier treatments and the like. In an exemplary scenario, the system 102 may use one of mean, median and mode value of the SKU for filling the missing and outlier values in the considered statistical features. In some embodiments, the system 102 may use regression-based univariate and multivariate technique for filling the missing and outlier values.

At step 408 of the present disclosure, the one or more hardware processors 204 of the system 102 solve the retail business problem based on the one or more statistical features i.e., the one or more transformed statistical features using the one or more retail algorithms. The one or more retail algorithms are accessed from the algorithm container present in the system 102. In an embodiment, the algorithm container comprises a plurality of retail algorithms that can be used for solving a plurality of retail problems. The plurality of retail algorithms can be open-source retail algorithms, licensed retail algorithms, and customized retail algorithms.

In particular, the system 102 identifies the most appropriate retail algorithms (also referred as the one or more retail algorithms) from the plurality of retail algorithms that are present in the algorithm container and then uses the most appropriate retail algorithms to solve the retail business problem.

Each retail algorithm uses a set of parameters and hyperparameters for solving the retail business problem. In particular, the system 102 triggers the ML pipeline with all possible parameters and hyperparameters, and desired metrics defined in YAML.

So, the system 102 tries to find the best set of parameters and hyperparameters of each algorithm to attain the accurate optimal result.

At step 410 of the present disclosure, the one or more hardware processors 204 of the system 102 identify a retail algorithm among the one or more retail algorithms that achieves highest accuracy, wherein the retail algorithm is identified by comparing accuracy measures of each retail algorithm.

In particular, the output of each algorithm of the one or more retail algorithms are compared to identify the retail algorithm that is solving the retail business problem in an efficient manner.

At step 412 of the present disclosure, the one or more hardware processors 204 of the system 102 determine whether an optimal result is obtained using the identified retail algorithm by comparing an output of the identified retail algorithm with a predefined output threshold. In particular, the optimal result is obtained when the output of the identified retail algorithm is in a predefined range of the predefined output threshold. Basically, the results provided by the algorithm container framework are termed as optimal if it addresses the business requirements by validating results with range of value (or) comparative value based on the business need.

In an embodiment, the predefined output threshold and the predefined range of the predefined output threshold are decided based on one of: an optimal value suggested by a generative artificial intelligence (Gen AI) based model present for the retail business problem, the algorithm calibrator repository maintained by the system 102 for the retail business problem, and a value suggested by at least one subject matter expert (SME).

The Gen AI recommendations are received from a Gen AI based model which is trained with specific information related with specific business requirements of a specific enterprise, For an instance, the specific enterprise may be a pet retailer or an electronic retailer or a home improvement retailer and the like, The Gen AI work by learning the patterns in a dataset and then using that knowledge to create new content similar to the original data. The Gen AI models are 'trained' by feeding them the datasets to facilitate this learning.

In another instance, the enterprise training may be carried out using business data in JSONL format or any defined structure, using a specific constructed token related to the business problem. The success of the usage of Gen AI for specific requirements depend on the dataset used for training which may comprise enterprise training and sometimes training from open-sources. The enterprise trainings involves information related to specific retailers for solving enterprise related business needs. In some instances, the training is carried out using open sources based on the information that is available outside the enterprise It should be noted that information that is used is either available to public for free use or the enterprise have the license to use. The dataset used for Gen AI training needs to have the primary information to address the business requirements and also needs to be available in open-sources or licensed sources with specified criteria. The specified criteria may be specific sites, documents with specific key words, and the like. In one instance, the site may be related to research articles dealing with retail. In another instance, the site may be related with particular area of retail, such as research articles specific to merchandizing. In yet another instance, the site may be related to documents containing meta-analysis related with retail topics such as space elasticity, price elasticity, etc. So, depending on the type of data set being used and the desired outcome, the generative AI training techniques may involve deep learning, adversarial learning, reinforcement learning, and more.

In at least one example embodiment, in the initial stage of ML pipeline, the optimal results are validated using SME inputs specific to the business problem and the retailer. Then, at the later stages, the predefined output threshold and the predefined range of the predefined output threshold are decided based on one of an optimal value suggested by the Gen AI based model present for the retail business problem, the algorithm calibrator repository maintained by the system 102 for the retail business problem, and the value suggested by the SME.

In at least one example embodiment, the optimal result considered for each SKU category is different. For example, in case of price elasticity calculation, an optimal value of the price elasticity may vary from one SKU category to another SKU category. Say, Category A - Electronics - TV may have a price elasticity in range of -1.2 (range: -1.5 to -0.8). Similarly, Category B - Baby dresses may have a price elasticity in range of -0.7 (range: -1.0 to -0.5), Category C - Pastas may have a price elasticity in range of -0.6 (range: -0.9 to -0.4), etc. So, the price elasticity range of all the SKU categories is stored in the algorithm calibrator repository as threshold for ML pipeline calibration by the algorithm calibrator.

Similarly, in case of demand forecast, the optimal value of accuracy measure and value may vary from one SKU category to another category. Say, Category A - Electronics- TV may have a MAE in range of 5 (range: 3 to 7), Category B - Baby dresses may have a MAPE in range of 20% (range: 15% to 25%), Category C - Vegetables may have a MAPE in range of 5% (range: 0% to 10%), etc. So, MAE value of each SKU category is stored in the algorithm calibrator repository as threshold for ML pipeline calibration by algorithm calibrator.

In some embodiments, the price elasticity is validated based on comparative criteria. For example, price elasticity of an essential item is lower than the luxury item.

At step 414 of the present disclosure, the one or more hardware processors 204 of the system 102 fine-tunes the system using the algorithm calibrator to obtain an improved system upon determining that the optimal result is not obtained.

In an embodiment, the fine-tuning of the system 102 by the algorithm calibrator comprises 1) fine-tuning of the historical data used for solving the retail business problem to obtain fine-tuned historical data, 2) fine-tuning of the one or more transformed statistical features that are used for solving the retail business problem by the algorithm calibrator to obtain a plurality of fine-tuned statistical features, and 3) fine-tuning the one or more retail algorithms that are used for solving the retail business problem by the algorithm calibrator.

Each retail algorithm of the one or more retail algorithms is fine-tuned using the plurality of fine-tuned statistical features and a plurality of combinations of the set of parameters, and the hyperparameters as an improvement process until the improved system is obtained.

The historical data considered for solving the retail business problem, and the statistical features considered kept on changing until the system 102 starts giving optimal results.

In an exemplary scenario, assume performance data received is a transaction table at the hourly or a daily level. And the performance data can be processed at day or weekly or monthly or quarterly level and so the level of aggregation varies. The level of aggregation purely depends on the category of items processed and thus accordingly, the optimal results are achieved. In one instance, for category A (perishable items), the optimal results (for price elasticity) may be obtained using hourly aggregation. In another instance category B (Electronics), optimal instance can be obtained by doing quarterly aggregation. So, the system keeps on fine-tuning the different stages of the ML pipeline until it starts giving the optimal results. It should be noted that every stage in the ML pipeline is unique. Also, different parameter outcomes are expected based on retail business problems, such as price elasticity, price optimization, promotions, markdown optimization, space optimization, etc.

In another exemplary scenario, during feature engineering, a cluster of SKUs is getting created (condition: Silhouette coefficient near to value 1) based on the sales performance and the SKU features. The cluster label may then be used by the system 102 as a feature to calculate the value of elasticity at a cluster level so that if the SKU does not have enough data points in the performance data, then the elasticity value may be assigned from the elasticity value of the cluster label. The number of cluster (K) to be used is decided by the algorithm calibrator randomly to get the elasticity value within the range for the exceptional cases. So, more number of cluster (K) tried out in the ML pipeline by the algorithm calibrator, the more accurate results can be obtained in this case. The optimal cluster K obtained by the algo calibrator after certain period or iterations statistically would form a normal distribution. The parameters and hyperparameters of the used clustering algorithm are then stored in the algorithm calibrator repository.

In yet another exemplary scenario, the price elasticity of a SKU may be tried out using different linear algorithms like Linear (OLS), Lasso, Ridge, Elastic Net etc. The hyperparameters like alpha, tolerance, scoring metrics, etc., may have an impact on the results of the linear algorithms. So, the algorithm calibrator fine tunes the hyperparameters of the linear algorithms to find the optimal results. Similarly, demand forecast of a SKU may be tried out using different linear algorithms like ARIMA, auto ARIMA, FBProphet, STL decompose etc. As discussed, the hyperparameters and the exogeneous variables (features derived from data feeds) may have an impact on the results of the algorithms. So, the algorithm calibrator fine tunes the hyperparameters of the linear algorithms to find the optimal results with the best scoring metrics. The optimal results from the calibrated ML pipeline are then stored in algorithm calibrator repository by the algorithm calibrator.

In an embodiment, the algorithm calibrator may fine tune each stage of the ML pipeline as a continuous process as more iteration are tried and time-period increases. The algorithm calibrator may perform the continuous process at each stage so that it can determine all possible optimal stage level configuration of pipelines as a larger number of pipeline iteration runs are tried as part of the pipeline execution. After a certain point, the algorithm calibrator may reach a level where no more new configurations are being determined, then all the optimal configuration and results determined by the algorithm calibrator are stored in the algorithm calibrator repository. And this algorithm calibrator repository may then be used as a starting point for the algorithm calibrator for further fine tuning of the ML pipeline stages.

In an embodiment, upon determining that the system 102 starts giving the optimal result, the one or more hardware processors 204 of the system 102 saves the optimal result in the algorithm calibrator repository along with the historical data and the retail business problem. In at least one example embodiment, the optimal result includes the determined retail algorithm, the one or more statistical features, and the set of parameters and the hyperparameters used in the determined retail algorithm, In particular, the system 102 logs the inputs such as data statistics and their patterns, resulting output such as best algorithm and their associated parameters and hyperparameters, metrics derived from the ML pipeline run into the algorithm calibrator repository after optimal results are obtained. It should be noted that the algorithm calibrator repository acts as a key repository of the system 102 that helps in identifying optimal results and the parameters and hyperparameters of the ML pipeline for future validation of similar business problem. Thus, in one embodiment, the one or more hardware processors 204 of the system 102 may use the algorithm calibrator repository for determining the optimal result for validation of a similar business problem for a new retailer.

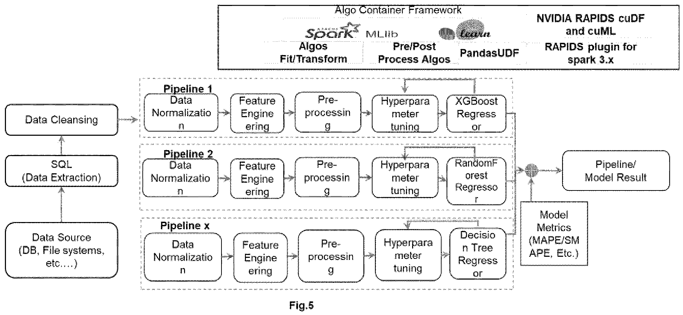

FIG.5 illustrates a schematic block diagram representation depicting a process followed by the algorithm container framework 300 for finding the best algorithm, in accordance with an embodiment of the present disclosure.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

As discussed earlier, one of the most critical problems faced by the retailers today is that they are required to find the best fit algorithm/model for their problem statement in a quicker span of time. Available techniques do not have an automatic way of finding the best algorithms at each stage of ML pipeline based on changing business scenario. Further, the approaches have limited evaluation metrics option to identify performance of the model. Additionally, they do not have auto performance monitoring tool to log outcome of business decision model in terms of metrics, standards, custom built inter mediate results and the like specific to the business problem, etc. So, to overcome the disadvantages, embodiments of the present disclosure provide a method and a system for handling dynamic retail requirements. The system automatically finds a best fit algorithm at each stage of ML pipeline based on changing business requirement, thereby reducing manual interventions/supervisions required from business experts in deciding the algorithm which ultimately reduces the technical dependency and development time spent on defining ML pipeline during model creation. The system also stores statistical features and the set of parameters and the hyperparameters used in the best fit algorithm, thereby reducing the time spent on finding the set of parameters and the hyperparameters to be used in the best fit algorithm for a similar business problem faced by a new retailer.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (400), comprising:
receiving (402), via one or more hardware processors, historical data associated with a retailer and a retail business problem, wherein the historical data comprises transaction data, and sale associated data of a predefined time period;
processing (404), via the one or more hardware processors, the historical data based on the retail business problem using one or more processing techniques to obtain a pre-processed historical data;
generating (406), via the one or more hardware processors, one or more statistical features based on the pre-processed historical data using a feature generation technique;
solving (408), via the one or more hardware processors, the retail business problem based on the one or more statistical features using one or more retail algorithms, wherein the one or more retail algorithms are accessed from an algorithm container, and wherein each retail algorithm uses a set of parameters and hyperparameters;
identifying (410), via the one or more hardware processors, a retail algorithm among the one or more retail algorithms that achieves highest accuracy, wherein the retail algorithm is identified by comparing accuracy measures of the one or more retail algorithms;
determining (412), via the one or more hardware processors, whether an optimal result is obtained using the identified retail algorithm by comparing an output of the identified retail algorithm with a predefined output threshold, wherein the optimal result is obtained when the output of the identified retail algorithm is in a predefined range of the predefined output threshold; and
fine-tuning (414), via the one or more hardware processors, a system using an algorithm calibrator to obtain an improved system upon determining that the optimal result is not obtained, wherein the improved system solves the retail business problem in an accurate manner.

2. The processor implemented method (400) as claimed in claim 1, wherein generating the one or more statistical features based on the pre-processed historical data using the feature generation technique comprises:
performing, via the one or more hardware processors, one or more data treatments on the one or more statistical features to obtain one or more transformed statistical features.

3. The processor implemented method (400) as claimed in claim 2, wherein solving the retail business problem based on the one or more statistical features using the one or more retail algorithms comprises:
solving, via the one or more hardware processors, the retail business problem based on the one or more transformed statistical features using the one or more retail algorithms.

4. The processor implemented method (400) as claimed in claim 3, wherein fine-tuning the system using the algorithm calibrator comprises:
fine-tuning, via the one or more hardware processors, the historical data used for solving the retail business problem by the algorithm calibrator to obtain a fine-tuned historical data;
fine-tuning, via the one or more hardware processors, the one or more transformed statistical features that are used for solving the retail business problem by the algorithm calibrator to obtain a plurality of fine-tuned statistical features; and
fine-tuning, via the one or more hardware processors, the one or more retail algorithms that are used for solving the retail business problem by the algorithm calibrator,
wherein each retail algorithm of the one or more retail algorithms is fine-tuned using the plurality of fine-tuned statistical features and a plurality of combinations of the set of parameters, and the hyperparameters as an improvement process until the improved system is obtained.

5. The processor implemented method (400) as claimed in claim 1, further comprising:
saving, via the one or more hardware processors, the optimal result in an algorithm calibrator repository along with the historical data and the retail business problem upon determining that the optimal result is obtained, wherein the optimal result comprises of the determined retail algorithm, the one or more statistical features, and the set of parameters and the hyperparameters used in the determined retail algorithm.

6. The processor implemented method (400) as claimed in claim 5, further comprising:
using, via the one or more hardware processors, the algorithm calibrator repository for determining the optimal result for validation of a similar business problem for a new retailer.

7. The processor implemented method (400) as claimed in claim 1, wherein the predefined output threshold and the predefined range of the predefined output threshold are decided based on one of: an optimal value suggested by a generative artificial intelligence (AI) based model present for the retail business problem, an algorithm calibrator repository maintained for the retail business problem, and a value suggested by at least one subject matter expert (SME).

8. The processor implemented method (400) as claimed in claim 1, wherein the one or more retail algorithms comprises one or more of open-source retail algorithms, licensed retail algorithms, and customized retail algorithms.

9. A system (102), comprising:
a memory (202) storing instructions;
one or more communication interfaces (206); and
one or more hardware processors (204) coupled to the memory (202) via the one or more communication interfaces (206), wherein the one or more hardware processors (204) are configured by the instructions to:
receive historical data associated with a retailer and a retail business problem, wherein the historical data comprises transaction data, and sale associated data of a predefined time period;
process the historical data based on the retail business problem using one or more processing techniques to obtain a pre-processed historical data;
generate one or more statistical features based on the pre-processed historical data using a feature generation technique;
solve the retail business problem based on the one or more statistical features using one or more retail algorithms, wherein the one or more retail algorithms are accessed from an algorithm container, and wherein each retail algorithm uses a set of parameters and hyperparameters;
identify a retail algorithm among the one or more retail algorithms that achieves highest accuracy, wherein the retail algorithm is identified by comparing accuracy measures of the one or more retail algorithms;
determine whether an optimal result is obtained using the determined retail algorithm by comparing an output of the identified retail algorithm with a predefined output threshold, wherein the optimal result is obtained when the output of the identified retail algorithm is in a predefined range of the predefined output threshold; and
fine-tune a system using an algorithm calibrator to obtain an improved system upon determining that the optimal result is not obtained, wherein the improved system solves the retail business problem in an accurate manner.

10. The system as claimed in claim 9, wherein for generating the one or more statistical features based on the pre-processed historical data using the feature generation technique, the one or more hardware processors (204) are configured by the instructions to:
perform one or more data treatments on the one or more statistical features to obtain one or more transformed statistical features.
wherein for solving the retail business problem based on the one or more statistical features using the one or more retail algorithms, the one or more hardware processors (204) are configured by the instructions to solve the retail business problem based on the one or more transformed statistical features using the one or more retail algorithms.
wherein for fine-tuning the system using the algorithm calibrator, the one or more hardware processors (204) are configured by the instructions to fine-tune the historical data used for solving the retail business problem by the algorithm calibrator to obtain fine-tuned historical data;
fine-tuning the one or more transformed statistical features that are used for solving the retail business problem by the algorithm calibrator to obtain a plurality of fine-tuned statistical features; and
fine-tuning the one or more retail algorithms that are used for solving the retail business problem by the algorithm calibrator, wherein each retail algorithm of the one or more retail algorithms is fine-tuned using the plurality of fine-tuned statistical features and a plurality of combinations of the set of parameters, and the hyperparameters as an improvement process until the improved system is obtained.

11. The system as claimed in claim 9, wherein the one or more hardware processors (204) are configured by the instructions to:
save the optimal result in an algorithm calibrator repository along with the historical data and the retail business problem upon determining that the optimal result is obtained, wherein the optimal result comprises of the determined retail algorithm, the one or more statistical features, and the set of parameters and the hyperparameters used in the determined retail algorithm.

12. The system as claimed in claim 11, wherein the one or more hardware processors (204) are configured by the instructions to:
use the algorithm calibrator repository for determining the optimal result for validation of a similar business problem for a new retailer.

13. The system as claimed in claim 9, wherein the predefined output threshold and the predefined range of the predefined output threshold are decided based on one of: an optimal value suggested by a generative artificial intelligence (AI) based model present for the retail business problem, an algorithm calibrator repository maintained for the retail business problem, and a value suggested by at least one subject matter expert (SME).
wherein the one or more retail algorithms comprise one or more of open-source retail algorithms, licensed retail algorithms, and customized retail algorithms.

14. One or more non-transitory machine-readable information storage mediums comprising one or more instructions which when executed by one or more hardware processors cause:
receiving historical data associated with a retailer and a retail business problem, wherein the historical data comprises transaction data, and sale associated data of a predefined time period;
processing the historical data based on the retail business problem using one or more processing techniques to obtain a pre-processed historical data;
generating one or more statistical features based on the pre-processed historical data using a feature generation technique;
solving the retail business problem based on the one or more statistical features using one or more retail algorithms, wherein the one or more retail algorithms are accessed from an algorithm container, and wherein each retail algorithm uses a set of parameters and hyperparameters;
identifying a retail algorithm among the one or more retail algorithms that achieves highest accuracy, wherein the retail algorithm is identified by comparing accuracy measures of the one or more retail algorithms;
determining whether an optimal result is obtained using the identified retail algorithm by comparing an output of the identified retail algorithm with a predefined output threshold, wherein the optimal result is obtained when the output of the identified retail algorithm is in a predefined range of the predefined output threshold; and
fine-tuning a system using an algorithm calibrator to obtain an improved system upon determining that the optimal result is not obtained, wherein the improved system solves the retail business problem in an accurate manner.

15. The one or more non-transitory machine-readable information storage mediums as claimed in claim 14,
wherein generating the one or more statistical features based on the pre-processed historical data using the feature generation technique comprises:
performing, one or more data treatments on the one or more statistical features to obtain one or more transformed statistical features.
wherein solving the retail business problem based on the one or more statistical features using the one or more retail algorithms comprises:
solving, the retail business problem based on the one or more transformed statistical features using the one or more retail algorithms.
wherein fine-tuning the system using the algorithm calibrator comprises fine-tuning, the historical data used for solving the retail business problem by the algorithm calibrator to obtain a fine-tuned historical data;
fine-tuning, the one or more transformed statistical features that are used for solving the retail business problem by the algorithm calibrator to obtain a plurality of fine-tuned statistical features; and
fine-tuning, the one or more retail algorithms that are used for solving the retail business problem by the algorithm calibrator,
wherein each retail algorithm of the one or more retail algorithms is fine-tuned using the plurality of fine-tuned statistical features and a plurality of combinations of the set of parameters, and the hyperparameters as an improvement process until the improved system is obtained.
